(19) Europäisches Patentamt
European Patent Office
Office européen des brevets

(11) **EP 3 703 169 A1**

(12) **EUROPEAN PATENT APPLICATION**

(43) Date of publication:
**02.09.2020 Bulletin 2020/36**

(21) Application number: **19159651.9**

(22) Date of filing: **27.02.2019**

(51) Int Cl.:
$H01M\ 10/052$ (2010.01)  $C01G\ 23/00$ (2006.01)
$C01G\ 31/00$ (2006.01)  $C01G\ 37/00$ (2006.01)
$C01G\ 45/00$ (2006.01)  $C01G\ 49/00$ (2006.01)
$C01G\ 51/00$ (2006.01)  $C01G\ 53/00$ (2006.01)
$C01F\ 5/00$ (2006.01)  $C01F\ 7/00$ (2006.01)
$C01F\ 11/00$ (2006.01)  $C01G\ 9/00$ (2006.01)
$C01G\ 15/00$ (2006.01)  $H01M\ 10/0562$ (2010.01)
$H01M\ 10/42$ (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Technische Universität Graz
8010 Graz (AT)**

(72) Inventor: **Rettenwander, Daniel
8044 Graz (AT)**

(74) Representative: **Patentanwaltskanzlei
Matschnig & Forsthuber OG
Biberstraße 22
Postfach 36
1010 Wien (AT)**

(54) **ELECTRODE MATERIALS HAVING A FLUORIDE-GARNET-LIKE STRUCTURE AND ELECTRODES COMPRISING SUCH ELECTRODE MATERIALS**

(57)  The present invention relates to the use of cryolithionite-based lithium-containing fluorides having a garnet crystal structure in electrochemical applications, wherein the use is selected from the group consisting of the use in an electrochemical storage and/or conversion device, the use in an electrode, and the use as electrode material comprised in an electrode. The present invention also relates to novel lithium-containing fluorides which are suitable for these uses as well as to processes for preparing these fluorides.

FIG. 1

EP 3 703 169 A1

**Description**

The present invention relates to the use of lithium-containing fluoride garnets in electrochemical applications. The present invention also relates to novel lithium-containing fluoride garnets, suitable for said use.

In the last decade based on various economic and ecological grounds, not least for preventing a climatic catastrophe, the development of more efficient, but at the same time more cost-effective electric storage systems such as batteries and capacitors with as much as possible advantageous chemical, electric and mechanical properties and good environmental compatibility, received a high priority worldwide. For energy storage, on the one hand, battery systems are used when it is necessary to store high amounts of energy for a long time; on the other hand, double layer capacitors are used when a given application requires high power density and cycle stability.

In electric double layer capacitors (EDCLs), by applying electric potential, a Helmholz double layer is built on both electrodes and the energy is stored in a purely electrostatic manner (without participation of redox processes). This process is very fast, so that EDLCs are suitable for recuperation techniques (energy recuperation from braking energy). However, the charge cannot be stored for a long time because the leaking currents are very high. By the use of highly porous electrode materials (porous graphite), the effective usable electrode surface in EDLCs increases by a factor of 1000 and more compared to the simple plate capacitors. The use of graphite electrodes in EDLCs limits the maximum voltage to 2.5 V. This limit is valid also for the known lithium capacitors, which, the same as the EDLCs, are based on the use of porous carbon (graphite) as electrodes material, which limits the usable voltage to 2.5 V.

In batteries, the energy is stored electrochemically in oxidations or reduction processes. In this way, today the maximum energy density in lithium ion batteries is about 190 mAh/g. The self-discharge can thereby be limited to up to 10% per year. Especially in lithium ion batteries, the entire stored energy can never be given back, because, when the final discharge voltage falls below 2.5 V, the structure of the cathode material is destroyed.

In the technological development of capacitors, the advantages of both storage systems are increasingly combined; capacitors are used for starting of large internal combustion engines, e.g. of boats or trains, because the batteries alone can never provide the high currents needed for the starting. In the case of energy recuperation from braking energy, also very high energy amounts must be stored in a short time, which overstrains today's battery technology and that is why capacitor banks are used for this purpose.

For the development of more efficient storage systems, among other things, various new electrode materials with improved properties were developed and used. One such material is the naturally occurring mineral triphylite having the (simplified) chemical formula $LiFePO_4$ which has proven itself as useful cathode material (Ravet et al. in Journal of Power Sources, 2001, 97-98, 503-507). These $LiFePO_4$ materials have an olivine structure, and the commercially used variants possess, despite their general suitability as cathode materials, still certain drawbacks and partially have very different properties. A basic drawback is, for example, that in the course of the charging and discharging cycles these materials are subject to chemical and structural changes which lead with the time to a significant and progressing reduction of the storage capacity.

In European patent application EP 2196434 A1, another electrode material on phosphate base was described, which has the structure of the mineral arrojadite, having the (simplified) chemical formula $(Li,Na,K)_{5.5}(Mg,Ca)_2Al(Mn,Fe,Zn)_{13}(PO_4)_{12}\cdot 2H_2O$, and can be obtained from it by, e.g., means of ion-exchange treatment for introduction of lithium ions or other desired ions. This material is superior to the $LiFePO_4$-based materials with respect to its physical and electrochemical properties in the use in batteries and can also be obtained easily, in a cost-effective and environment-friendly manner.

Notwithstanding, there is a continuing need for other electrode materials with also good or even better properties, which can be used in a cost-effective manner above all for various electric and electrochemical storage devices on the basis of (aqueous and) non-aqueous systems, in particular for both batteries and capacitors.

It is an object of the present invention to provide lithium-containing fluoride garnets for use in electrochemical applications. Specifically, it is an object of the present invention to provide lithium-containing fluoride garnets for use in electrochemical applications, which garnets have a high electrochemical stability and which can be produced at low cost.

In particular, it is an object of the present invention to provide new electrode materials and electrodes based on lithium-containing fluoride garnets with potentially high redox voltages and high capacities. These new electrode materials and electrodes shall provide for the development of improved electrochemical storage and/or conversion devices, in particular for batteries and capacitors e.g. Li-ion battery systems, with higher energy densities needed to electrify transportation industry and support growing intermittent renewable energy sources.

These objects are met by the present invention, which, in a first aspect, relates to a lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = Li$^+$, K$^+$ and/or Ag$^+$

M" = Ti$^{3+}$, V$^{3+}$, Cr$^{3+}$, Mn$^{3+}$, Fe$^{3+}$, Ni$^{3+}$ and/or Co$^{3+}$, wherein M" is optionally partially substituted with X$_e$, with X = Al$^{3+}$, Ga$^{3+}$, In$^{3+}$, Sc$^{3+}$ and/or Y$^{3+}$, and e ≤ 1

M''' = Mg$^{2+}$, Cu$^{2+}$, and/or Zn$^{2+}$

A = Cl$^-$, Br$^-$, and/or I$^-$

a = 0 - 3

b = 0 - 2

c = 0 - 2

b + c = 2

d = 0 - 1

wherein (Li$_{3+c}$) is optionally partially substituted with Z$_h$, with Z = Na$^+$, K$^+$, Rb$^+$, Cs$^+$, Ag$^+$, B$^{3+}$, Al$^{3+}$, Ga$^{3+}$, In$^{3+}$, Si$^{4+}$, and/or Ge$^{4+}$ and h < 0.2,

wherein the anions are optionally partially replaced by a vacancy VA$_f$, with f = 0 - 1 and/or the cations are optionally partially replaced by a vacancy VC$_g$, with g = 0 - 0.5,

and with the proviso that lithium-containing fluorides of formula {Na$_3$}[M"$_2$](Li$_3$)F$_{12}$ with M = Ti$^{3+}$, V$^{3+}$, Cr$^{3+}$, Mn$^{3+}$, Fe$^{3+}$, Ni$^{3+}$, and/or Co$^{3+}$ are excluded.

Furthermore, in another aspect, the present invention also relates to the use of a lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = Li$^+$, K$^+$ and/or Ag$^+$

M" = Ti$^{3+}$, V$^{3+}$, Cr$^{3+}$, Mn$^{3+}$, Fe$^{3+}$, Cu$^{3+}$, Zn$^{3+}$, Ni$^{3+}$ and/or Co$^{3+}$, wherein M" is optionally partially substituted with X$_e$, with X = Al$^{3+}$, Ga$^{3+}$, In$^{3+}$, Sc$^{3+}$ and/or Y$^{3+}$, and e ≤ 1

M''' = Mg$^{2+}$, Ca$^{2+}$, Cu$^{2+}$, and/or Zn$^{2+}$

A = Cl$^-$, Br$^-$, and/or I$^-$

a = 0 - 3

b = 0 - 2

c = 0 - 2

b + c = 2

d = 0 - 1

wherein (Li$_{3+c}$) is optionally partially substituted with Z$_h$, with Z = Na$^+$, K$^+$, Rb$^+$, Cs$^+$, Ag$^+$, B$^{3+}$, Al$^{3+}$, Ga$^{3+}$, In$^{3+}$, Si$^{4+}$, and/or Ge$^{4+}$ and h < 0.2,

wherein the anions are optionally partially replaced by a vacancy VA$_f$, with f = 0 - 1 and/or the cations are optionally partially replaced by a vacancy VC$_g$, with g = 0 - 0.5,

or to the use of cryolithionite ({Na$_3$}[Al$_2$](Li$_3$)F$_{12}$),

in electrochemical applications, wherein the use of said lithium-containing fluoride or cryolithionite is selected from the group consisting of the use in an electrochemical storage and/or conversion device, the use in an electrode, and the use as electrode material comprised in an electrode, and with the proviso that the use of cryolithionite ({Na$_3$}[Al$_2$](Li$_3$)F$_{12}$) as conducting salt comprised in a liquid electrolyte of an electrochemical storage and/or conversion device is excluded.

Accordingly, the present invention relates to lithium-containing fluorides based on cryolithionite. Cryolithionite, with the formula Na$_3$Al$_2$Li$_3$F$_{12}$, is a unique natural mineral of the fluoride garnet group that occurs in hydrothermal deposits associated with minerals of other alumino-fluorides (*e.g.*, Ivigtut, Greenland). In the Li-fluoride garnet structure, the F- is located at general crystallographic positions 96*h* (located at the corners of the polyhedral), which forms an F- framework with interstices occupied by Na$^+$ at the eight-fold coordinated 24*c* position (A-site), by Al$^{3+}$ at the six-fold coordinated 16*a* position (B-site) and by Li$^+$ at the four-fold coordinated 24*d* position (C-site). Like oxide garnets, also cryolithionite is remarkably chemically flexible.

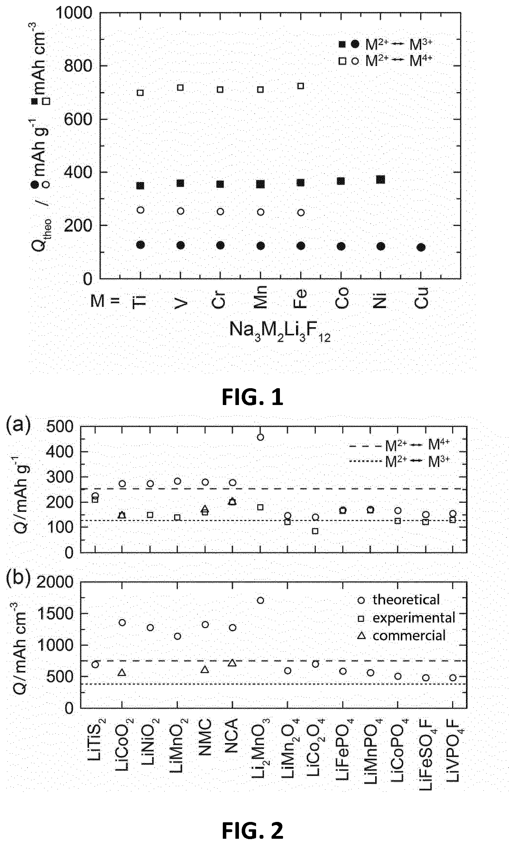

Interestingly and to the inventor's best knowledge, for transition-metal-substituted Cryolithionites, no electrochemical testing regarding its applicability as electrode material for energy storage devices has been performed to date. Due to the possibility to intercalate up to 4 Li$^+$ into the garnet structure as demonstrated for an oxygen-based garnet analog (Li$_3$Nd$_3$W$^{6+}$$_2$O$_{12}$ + 4Li$^+$ + 2e$^-$ ↔ Li$_7$Nd$_3$W$^{4+}$$_2$O$_{12}$) [H. Xie, K.-S. Park, J. Song, J. B. Goodenough, Reversible lithium insertion in the garnet framework of Li3Nd3W2O12: Electrochem. Comm. 19 (2012) 135-137] theoretical gravimetric and volumetric capacities of up to 260 mAh g$^{-1}$ and 745 mAh cm$^{-3}$ can be achieved for transition metal-substituted Cryolithionites, as illustrated in Figure 1 of Example 3. The theoretical gravimetric capacities for a single-oxidation step (2M$^{2+}$ → 2M$^{3+}$) are comparable with the state-of-the-art electrode materials, whereby the theoretical volumetric capacities are slightly lower. Considering a double-oxidation step (2M$^{2+}$ → 2M$^{4+}$) the capacity could even exceed the highest experimentally achieved capacities for intercalation cathodes, as illustrated in Figure 2 of Example 3. Moreover, as fluorine is the only element in the periodic table with higher electronegativity than oxygen, the oxidation of M$^{3+}$ to M$^{4+}$ in fluorine-based materials with redox voltages about 2 V higher compared to conventional oxide-base cathode materials is possible [Y. Koyama, I. Tanaka, H. Adachi, New fluoride cathodes for rechargeable lithium batteries: J. Electrochem. Soc. 147 (2000) 3633-3636].

Considering redox voltages of other fluorine-based cathodes are on the order of 5 V, a very high theoretical energy density can be expected [C. Liu, Z. G. Neale, G. Cao, Understanding electrochemical potentials of cathode materials in rechargeable batteries: Mater. Today 19 (2016) 109-123]. Experimental testing of charge and discharge capacities of, in example, Na$_3$Fe$_2$Li$_3$F$_{12}$ composite electrodes (see Example 5 below) revealed that Na$_3$Fe$_2$Li$_3$F$_{12}$ exceeded its theoretical capacity by a factor of 3 (or 1.5 time the capacity if the redox process consider Fe$^{2+}$ ↔ Fe$^{4+}$). Even at a rate of 1C the theoretical capacity was reached. These theoretical considerations and experimental findings demonstrate that the lithium-containing fluorides according to the invention are useful for establishing new electrode materials and electrodes which may be used in the development of improved electrochemical storage and/or conversion devices, in particular for batteries and capacitors e.g. Li-ion battery systems, with higher energy densities needed to electrify transportation industry and support growing intermittent renewable energy sources.

A further advantage of the lithium fluoride garnets according to the present invention is the possibility to synthesize them at room temperature by simple and reproducible precipitation reactions. In contrast to conventional synthesis routes that include several high temperature sintering steps, the lithium fluoride garnets according to the present invention may be prepared at a very low cost and without Li-loss. The garnets of the present invention, hence, may be used as ultra-low cost components for future battery and capacitor technologies.

In certain embodiments of the lithium-containing fluorides described herein, the anions may be partially replaced by a vacancy $VA_f$, with $f = 0 - 1$ and/or the cations may be partially replaced by a vacancy $VC_g$, with $g = 0 - 1$. In certain embodiments of the lithium-containing fluorides described herein, ($Li_{3+c}$) at the C-site may be partially substituted with $Z_h$, with $Z = Na^+, K^+, Rb^+, Cs^+, Ag^+, B^{3+}, Al^{3+}, Ga^{3+}, In^{3+}, Si^{4+},$ and/or $Ge^{4+}$, and $h < 0.2$. It is clear to those skilled in the art that the partial replacement of the cations and/or anions by a vacancy or the partial substitution of ($Li_{3+c}$) with another cation may require a charge compensation. For example, when $Fe^{3+}$ is partially substituted in $Na_3Fe_2Li_3F_{12}$ by 0.1 $Ca^{2+}$ per formula unit (pfu) additional 0.1 Li pfu has to be added to achieve charge neutrality. In case of vacancy formation of 0.2 pfu in the fluorine-anion lattice of $Na_3In_{1.9}Ca_{0.1}Li_{3.1}F_{12}$ additional 0.2 Li pfu has to be added ($Na_3Fe_{1.9}Ca_{0.1}Li_{3.3}F_{1.8}VA_{0.2}$).

In certain embodiments of the invention, the lithium-containing fluoride being useful in electrochemical applications has a stoichiometric composition of formula $\{Na_3\}[M"_2](Li_3)F_{12}$. Preferably, the lithium-containing fluoride has a stoichiometric composition selected from the group consisting of $\{Na_3\}[Ti_2](Li_3)F_{12}$, $\{Na_3\}[V_2](Li_3)F_{12}$, $\{Na_3\}[Cr_2](Li_3)F_{12}$, $\{Na_3\}[Mn_2](Li_3)F_{12}$, $\{Na_3\}[Fe_2](Li_3)F_{12}$, $\{Na_3\}[Co_2](Li_3)F_{12}$, and $\{Na_3\}[Ni_2](Li_3)F_{12}$.

In certain embodiments, the lithium-containing fluoride has a stoichiometric composition selected from the group consisting of $\{Na_3\}[Fe_{1.95}Mg_{0.05}](Li_{3.05})F_{12}$, $\{Na_3\}[Co_{1.95}Mg_{0.05}](Li_{3.05})F_{12}$, $\{Na_3\}[Ni_{.95}Mg_{0.05}](Li_{3.05})F_{12}$, $\{Na_3\}[Fe_{1.95}Ca_{0.05}](Li_{3.05})F_{12}$, $\{Na_3\}[Co_{1.95}Cu_{0.05}](Li_{3.05})F_{12}$, $\{Na_3\}[Ni_{.95}Cu_{0.05}](Li_{3.05})F_{12}$. The increase in the Li content larger than 3 formula units in the garnet formula leads to the activation of fast-ion diffusion in garnets. This is demonstrated by O'Callagahan *et al.* by synthesizing the oxide-based $Li_{3+x}Nd_3Te_{2-x}Sb_xO_{12}$ garnets, with $x = 0.0 - 1.5$, to study the relationship between Li-site occupation and Li-ion conductivity (O'Callaghan et al, Switching on Fast Lithium Ion Conductivity in Garnets: The Structure and Transport Properties of Li3+xNd3Te2-xSbxO12: Chem. Mater. 20 (2008) 2360.) They found a decrease in the activation energy from 1.22 eV to ~0.67 eV and an increase in the Li-ion conductivity from 0.01 mS cm$^{-1}$ at 600 °C to 0.03 mS cm$^{-1}$ at 400 °C by increasing the amount of Li at the interstitials by only 0.05 Li per formula unit (pfu). The further increase of Li goes along with an increase in Li-ion conductivity up to 3 mS cm$^{-1}$ at 400 °C. Introducing small amounts of extra Li into Cryolithionite (0.05-0.10 formula units) will consequently lead to an increase in the Li-ion conductivity by 10-12 orders of magnitude. This leads to a significant improved charge-discharge kinetic compared to the pristine cryolithionites, i.e. cryolithionite-based materials having a Li content of 3.

In certain embodiments of the invention, $a = 0$ and $d = 0$. Thus, A is not present in the fluoride garnet structure und the A-site is only occupied by $Na^+$ which is available in any quantity at considerable low costs.

In preferable embodiments of the invention, $M" = Ti^{3+}, Fe^{3+},$ or $Mn^{3+}$.

In preferable embodiments of the invention, $M''' = Ca^{2+}, Cu^{2+}, Mg^{2+}$. These cations have similar ionic radii, thus, these cations fit very well into the B-site of the garnet crystal structure. The inclusion of $Ca^{2+}, Cu^{2+}$ or $Mg^{2+}$ results in an increase in the Li content. The increase in the Li content larger than 3 formula units in the garnet formula leads to the activation of fast-ion diffusion in garnets. This is demonstrated by O'Callagahan *et al.* by synthesizing the oxide-based $Li_{3+x}Nd_3Te_{2-x}Sb_xO_{12}$ garnets, with $x = 0.0 - 1.5$, to study the relationship between Li-site occupation and Li-ion conductivity (O'Callaghan et al, Switching on Fast Lithium Ion Conductivity in Garnets: The Structure and Transport Properties of Li3+xNd3Te2-xSbxO12: Chem. Mater. 20 (2008) 2360.) They found a decrease in the activation energy from 1.22 eV to ~0.67 eV and an increase in the Li-ion conductivity from 0.01 mS cm$^{-1}$ at 600 °C to 0.03 mS cm$^{-1}$ at 400 °C by increasing the amount of Li at the interstitials by only 0.05 Li per formula unit (pfu). The further increase of Li goes along with an increase in Li-ion conductivity up to 3 mS cm$^{-1}$ at 400 °C. Introducing small amounts of extra Li into Cryolithionite (0.05-0.10 formula units) will consequently lead to an increase in the Li-ion conductivity by 10-12 orders of magnitude. This leads to a significant improved charge-discharge kinetic compared to the pristine cryolithionites, i.e. cryolithionite-based materials having a Li content of 3.

In certain embodiments, the lithium-containing fluoride may further comprise at least one anion dopant selected from the group consisting of $O^{2-}, N^{3-}$ and/or $S^2$, replacing the anions in the crystal lattice of the garnet in an amount of up to 10%. Representative examples of lithium-containing fluorides comprising an anion dopant are $\{Na_3\}[Fe_2](Li_{3.1})F_{11.9}O_{0.1}$, $\{Na_3\}[Fe_2](Li_{3.1})F_{11.9}S_{0.1}$, and $\{Na_3\}[Mn_2](Li_{3.2})F_{11.9}N_{0.1}$.

A further aspect of the present invention relates to a process for preparing a lithium-containing fluoride having a garnet crystal structure as described herein, wherein the process is characterized in that precursor compounds, preferably salts, hydroxides and/or oxides, of components $Na^+$, M', M" and/or M'" are reacted with one another.

In a particularly, preferred embodiment, the reaction is carried out by means of a precipitation reaction of the dissolved precursor compounds of said components in the presence of hydrogen fluoride (see Example 1 below). The synthesis of the lithium-containing fluorides by means of a precipitation reaction has the advantages that there is no Li-loss and that no heat treatment is required, thus, keeping the production costs very low.

In other embodiments, the reaction is carried out by means of solid-state synthesis (see Example 2 below). Preferably, the precursor compounds are fluorides of said components.

It will be appreciated that these processes are straightforward and can be carried out from small to large scale, enabling the realisation of a favourably priced product, e.g. an electrode.

A further aspect of the present invention relates to an electrode comprising or consisting of a lithium-containing fluoride as described herein, wherein the lithium-containing fluoride has a stoichiometric composition as defined herein.

In preferred embodiments, the lithium-containing fluorides of the invention are used as electrode materials for electrodes, in particular they are used as an anode or a cathode. In preferable embodiments, the electrode consists of, i.e. it is manufactures from, a lithium-containing fluoride as described herein.

Electrodes which comprise or consist of said lithium-containing fluorides are advantageously used in electrochemical storage and/or conversion devices on the basis of aqueous or non-aqueous systems, in particular, in lithium ion secondary batteries and electric double layer capacitors (ELDC) such as lithium capacitors.

A further aspect of the present invention relates to a electrochemical storage and/or conversion device comprising a lithium-containing fluoride having a garnet crystal structure as described herein, with the proviso that the electrochemical storage and/or conversion device does not include $\{Na_3\}[Al_2](Li_3)F_{12}$ in the form of a conducting salt in a liquid electrolyte.

The electrochemical storage and/or conversion device is preferably selected from the group consisting of a battery, an accumulator, a supercapacitor (supercap) and a fuel cell. In capacitors, energy densities of up to 10Wh/kg may be achieved (see e.g. Bonaccorso F et al., Graphene, related two dimensional crystals, and hybrid systems for energy conversion and storage. Science, 2015, 347: 1246501-1246501). Said lithium-containing fluorides are advantageously used in electrochemical storage and/or conversion devices on the basis of aqueous or non-aqueous systems, in particular, in lithium ion secondary batteries and electric double layer capacitors such as lithium capacitors.

As mentioned above, the lithium-containing fluoride garnets of the invention are useful electrode materials for electrodes, for both an anode and a cathode, which electrodes may be used in said electrochemical storage and/or conversion devices. In preferable embodiments, the electrode consists of, i.e. it is fabricated of, a lithium-containing fluoride as described herein. Thus, the present invention also relates to an electrochemical storage and/or conversion device comprising at least one electrode formed of a lithium-containing fluoride as described herein.

In the following, in order to further demonstrate the present invention, illustrative and non-restrictive examples, figures and embodiments, in particular with reference to the use of the invention as electrode material in lithium-based electrochemical storage and/or conversion devices are discussed.

BRIEF DESCRIPTION OF THE FIGURES

Fig. 1 shows the theoretical gravimetric (squares) and volumetric (cycles) capacities for a single-oxidation step ($2M^{2+} \rightarrow 2M^{3+}$ (filled symbols)) and two-oxidation step ($2M^{2+} \rightarrow 2M^{4+}$ (open symbols)).

Fig. 2 shows the achievable gravimetric capacities (a) and volumetric capacities (b) of the cryolithionite variants in comparison to the theoretical capacities, highest experimental achieved capacities for intercalation cathodes until now, as well as the capacities of cathodes in commercialized cells (dotted line = single-oxidation step, dashed line = double-oxidation step); see Reference (5) - (18) from literature listed below. NMC111 = $LiNi_{0.33}Mn_{0.33}Co_{0.33}O_2$, NCA = $LiNi_{0.8}Co_{0.15}Al_{0.05}O_2$.

Fig. 3 shows that the Rietveld refinement of the PXRD data and reveals no phases other than $Na_3Fe_2Li_3F_{12}$.

Fig. 4 shows that the Rietveld refinement of the PXRD data and reveals no phases other than $Na_3Cr_2Li_3F_{12}$.

Fig. 5 shows that the Rietveld refinement of the PXRD data and reveals no phases other than $Na_3Ti_2Li_3F_{12}$.

Fig. 6 Charge and discharge capacities, as well as the efficiency of the $Na_3Fe_2Li_3F_{12}$ composite electrodes, are shown at different C-rates and as a function of the cycle number.

Fig. 7 Charge-discharge performance of $Na_3Cr_2Li_3F_{12}$ at different C-rates, C/20, C/10, C/2, C, 2C, in a voltage range of 0.1 - 3.2 V vs. $Li^+$/Li as a function of time.

**Fig. 8** Charge discharge profiles of $Na_3Cr_2Li_3F_{12}$ Li-ion batteries at different charge and discharge rates of C/20, C/10, C/2, C, and 2C in a voltage range of 0.1 - 3.0 V vs. $Li^+$/Li.

**Fig. 9** Cyclic voltammogram (CV) profiles of the $Na_3Cr_2Li_3F_{12}$ composite at sweep rates of 0.05, 0.10, 0.20, 0.50, 1.00, 2.00, 5.00, 10.0, 20.0, and 50.0 mV/s in a voltage range of 0.1 - 3 V vs. $Li^+$/Li.

**Fig. 10** Charge and discharge capacities, as well as the efficiency of the $Na_3Cr_2Li_3F_{12}$ composite electrodes, are shown at different C-rates and as a function of the cycle number.

**Fig. 11** Charge-discharge performance of $Na_3Fe_2Li_3F_{12}$ at different C-rates, C/20, and C/10, in a voltage range of 0.1 - 3.0 V vs. $Li^+$/Li as a function of time.

**Fig. 12** Charge discharge profiles of $Na_3Fe_2Li_3F_{12}$ Li-ion batteries at different charge and discharge rates of C/20, C/10, C/2, C, and 2C in a voltage range of 0.1 - 3.0 V vs. $Li^+$/Li.

**Fig. 13** Cyclic voltammogram (CV) profiles of the $Na_3Fe_2Li_3F_{12}$ composite at sweep rates of 0.05, 0.10, 0.20, 0.50, 1.00, 2.00, 5.00, 10.0, 20.0, and 50.0 mV/s in a voltage range of 0.1 - 3 V vs. $Li^+$/Li.

EXAMPLES

**Example 1: Liquid-based synthesis of lithium-containing fluorides according to the invention**

Lithium-containing fluorides having a stoichiometric composition as defined in the present disclosure are prepared by precipitation from aqueous solution. Precursor compounds, preferably salts, hydroxides and/or oxides, of components $Na^+$, M', M" and/or M'" are first dissolved in distilled water. Afterwards a 5 % HF solution (in methanol) is added for the precipitation of the lithium-containing fluorides having a garnet crystal structure.

Liquid based synthesis of $Na_3Fe_2Li_3F_{12}$

$Na_3Al_2Li_3F_{12}$ was synthesized using 10 ml of NaOH, and stoichiometric amounts of LiOH and $NaAlO_2$. During stirring a precipitation was formed, which was then dissolved by adding HCl until a pH value of 2 was achieved. To the solution 10 ml of 5% HF (1:10 in methanol) was added. The fluoride garnet then precipitated over night and was purified by washing with methanol 3 times.

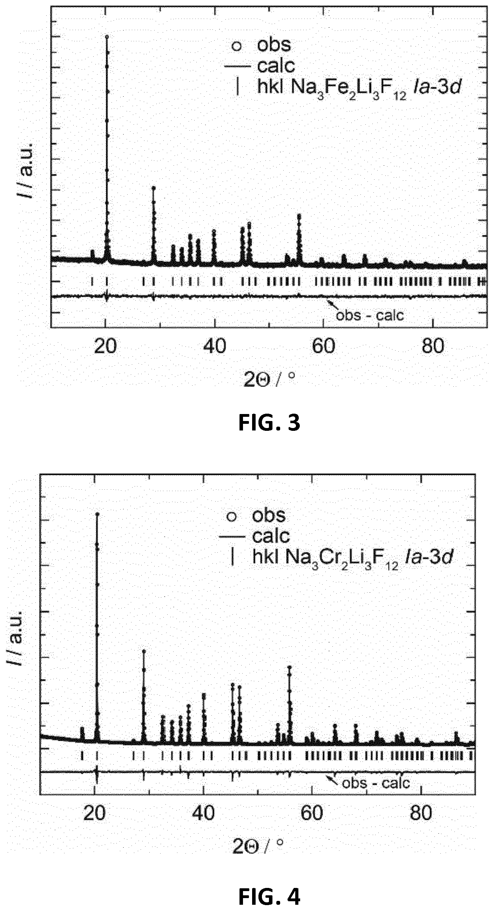

To check if the synthesis was successful X-ray powder diffraction measurements were carried out using a Bruker D8 Advance diffractometer operating with CuKa radiation. Data were collected at angles 2θ ranging from 10° to 100°. The Rietveld refinement of the PXRD data performed with the Bruker X-PERT HighScore PLUS suite is shown in **Fig. 3** and reveals no phases other than $Na_3Fe_2Li_3F_{12}$.

**Example 2: Solid state synthesis of lithium-containing fluorides according to the invention**

Solid state synthesis of lithium containing fluorides having a stoichiometric composition as defined in the present disclosure is performed by reacting precursor compounds in form of fluorides of components $Na^+$, M', M" and/or M'". The precursor compounds in form of fluorides are mixed, pressed and then put into a copper tube. The copper tube is then put into an oven under argon atmosphere to prevent oxidation of the copper. The copper tube is then heated up with a heating rate between 5 and 10 °C/min to a temperature, preferably in a range of between 600 °C and 800 °C for a predefined dwelling time, preferably for 12 - 24 hours.

Solid-state based synthesis of $Na_3Cr_2Li_3F_{12}$

Solid-state synthesis of $Na_3Cr_2Li_3F_{12}$ was done with stoichiometric amounts of NaF, LiF and $CrF_3$. The substances were mixed, pressed and the pellet was put into a cooper tube, which was sealed under argon (to exclude any oxygen). The copper tube was then heated up to 700° C for 15 hours.

To check if the synthesis was successful X-ray powder diffraction measurements were carried out using a Bruker D8 Advance diffractometer operating with CuKa radiation. Data were collected at angles 2θ ranging from 10° to 100°. The Rietveld refinement of the PXRD data shown in **Fig. 4** and reveals no phases other than $Na_3Cr_2Li_3F_{12}$.

Solid-state based synthesis of $Na_3Ti_2Li_3F_{12}$

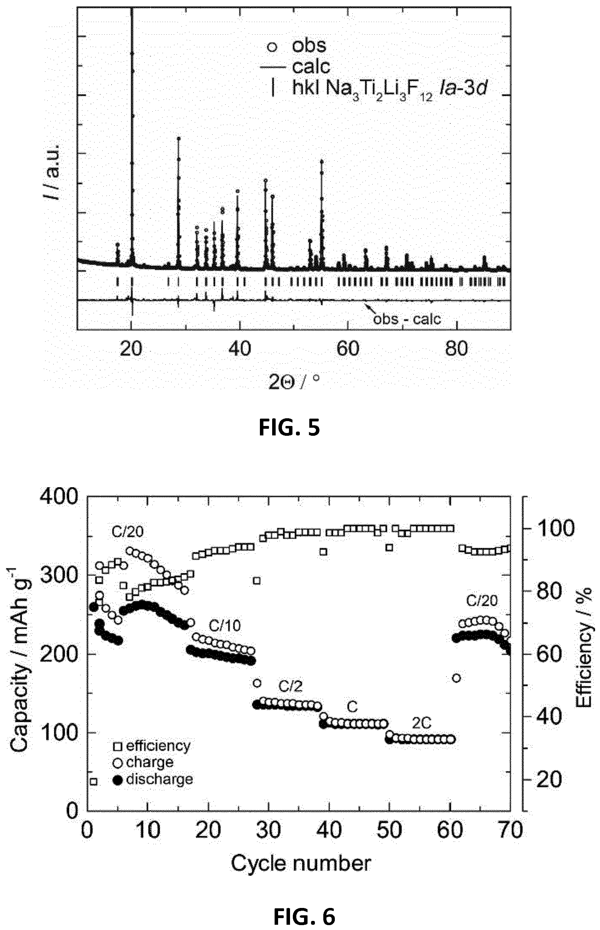

Solid-state synthesis of $Na_3Ti_2Li_3F_{12}$ was done with stoichiometric amounts of NaF, LiF and $TiF_3$. The substances were mixed, pressed and the pellet was put into a cooper tube, which was sealed under argon (to exclude any oxygen). The copper tube was then heated up to 700° C for 48 hours. To check if the synthesis was successful X-ray powder diffraction measurements were carried out using a Bruker D8 Advance diffractometer operating with CuKa radiation. Data were collected at angles 2θ ranging from 10° to 100°. The Rietveld refinement of the PXRD data is shown in **Fig. 5** and reveals no phases other than $Na_3Ti_2Li_3F_{12}$.

## Example 3: Theoretical analysis of capacities and voltage range of transition-metal-substituted cryolithionites.

Due to the possibility to intercalate up to 4 $Li^+$ into the garnet structure as demonstrated for an oxygen-based garnet analog ($Li_3Nd_3W^{6+}_2O_{12}$ + 4$Li^+$ + 2$e^-$ ↔ $Li_7Nd_3W^{4+}_2O_{12}$) [H. Xie, K.-S. Park, J. Song, J. B. Goodenough, Reversible lithium insertion in the garnet framework of Li3Nd3W2O12: Electrochem. Comm. 19 (2012) 135-137] theoretical gravimetric and volumetric capacities of up to 260 mAh $g^{-1}$ and 745 mAh $cm^{-3}$ can be achieved for transition metal-substituted Cryolithionites, as illustrated in **Fig. 1**. The theoretical gravimetric capacities are calculated by Faraday's law according to $Q_{theo}$ = $[(nF) / (3600 \times M_w)] \times 1000$ mAh $g^{-1}$. Where n is the number of charge carrier, F is the Faraday constant and $M_w$ is the molecular weight of the active material used in the electrode. The theoretical volumetric capacties are calculated by multiplying the theoretical gravimetric capacities with the theoretical density of the lithiated active material used in the electrode. The theoretical gravimetric capacities for a single-oxidation step ($2M^{2+} \to 2M^{3+}$) are comparable with the state-of-the-art electrode materials, whereby the theoretical volumetric capacities are slightly lower. Considering a double-oxidation step ($2M^{2+} \to 2M^{4+}$) the capacity could even exceed the highest experimentally achieved capacities for intercalation cathodes, as illustrated in **Fig. 2**.

Moreover, as fluorine is the only element in the periodic table with higher electronegativity than oxygen, the oxidation of $M^{3+}$ to $M^{4+}$ in fluorine-based materials with redox voltages about 2 V higher compared to conventional oxide-base cathode materials is possible [Y. Koyama, I. Tanaka, H. Adachi, New fluoride cathodes for rechargeable lithium batteries: J. Electrochem. Soc. 147 (2000) 3633-3636]. Considering redox voltages of other fluorine-based cathodes are on the order of 5 V, a very high theoretical energy density can be expected [C. Liu, Z. G. Neale, G. Cao, Understanding electrochemical potentials of cathode materials in rechargeable batteries: Mater. Today 19 (2016) 109-123].

## Example 4: Investigation of charge and discharge capacities of $Na_3Cr_2Li_3F_{12}$

A 2 g batch of $Na_3Cr_2Li_3F_{12}$, was synthesized as explained in Example 2. Conventional lithium ion batteries were then prepared as described as follow. The anode is prepared by 140 mg of the $Na_3Cr_2Li_3F_{12}$ batch mixed with 50 mg Super C65, 10 mg Knyar 761 (PVDF) and 0.9 ml N-Methyl-2-pyrrolidon. The obtained slurry was casted on a Cu-foil with a thickness of 100 $\mu$m and dried at 60°C for 12 h in a climate chamber. 10 mm diameter electrodes were stamped out of the cooper foil and were dried again under reduced pressure of ($10^{-4}$ mbar) for 12 h. Batteries were cycled at different rates of C/20, C/10, C/2, C, 2C in a voltage range of 0.1 - 3 V vs.

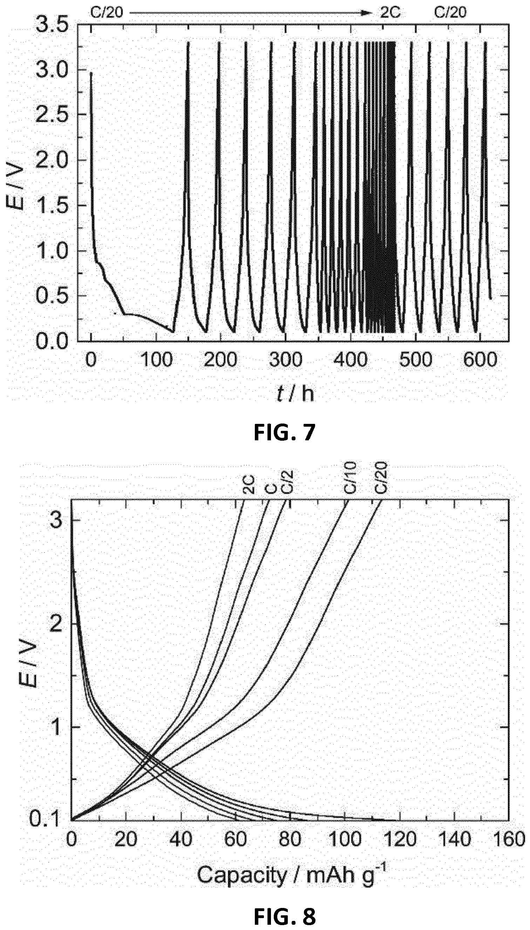

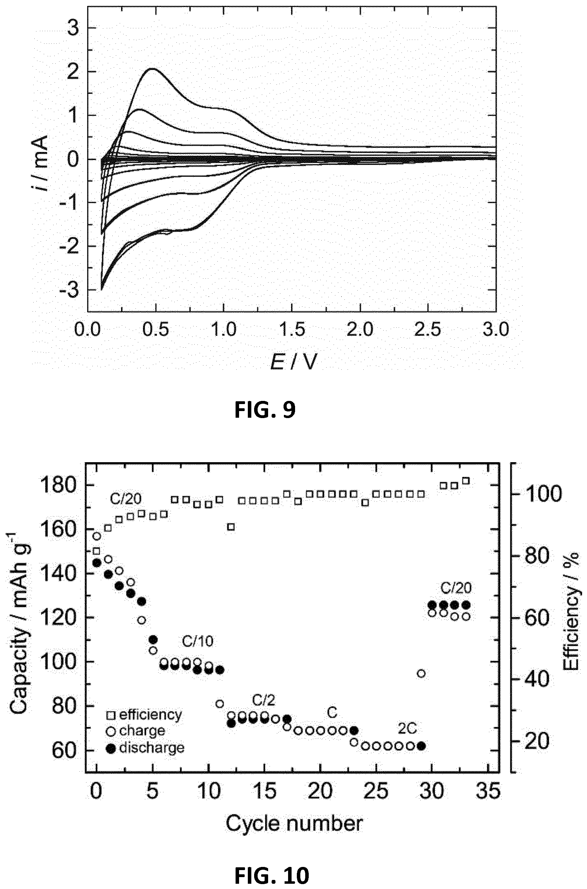

$Li^+$/Li. The theoretical specific capacity calculated according to the weight of the active material in the electrode is 123.04 mAh/g for insertion of 2 Li per formula unit. The former value was used as the 1C rate (note that 1C refers to two Li extraction from the crystal structure per formula unit in 1 h). The initial charge and discharge capacities are 785 and 172 mAh/g, respectively, corresponding to a Coulombic efficiency of 22 %. Such an irreversible capacity loss in the initial cycle corresponds to formation of a solid electrolyte interface (SEI) as well as to the amorphisation of the garnet structure. Nevertheless, after the first few cycles the garnet shows excellent reversibility once the SEI layer is completely formed. The corresponding cycling charge-discharge performance of $Na_3Cr_2Li_3F_{12}$ at different C-rates, C/20, C/10, C/2, C, 2C, in a voltage range of 0.1 - 3.2 V vs. $Li^+$/Li as a function of time is presented in **Fig. 7**. The first charge discharge profiles of $Na_3Cr_2Li_3F_{12}$ Li-ion batteries at different charge and discharge rates of C/20, C/10, C/2, C, 2C are displayed in **Fig. 8**. The profiles of the discharge process may originate from redox reaction, which is also reflected by the cyclic voltammogram (CV) profiles at sweep rates of 0.05, 0.10, 0.20, 0.50, 1.00, 2.00, 5.00, 10.0, 20.0, and 50.0 mV/s as presented in **Fig. 9** indicating redox activity. The cycling charge-discharge performance and the Coulombic efficiency of $Na_3Cr_2Li_3F_{12}$ at different C-rates, C/20, C/10, C/2, C, 2C, in a voltage range of 0.1 - 3.2 V vs. $Li^+$/Li as a function of the cycle number is presented in **Fig. 10** After the formation of the SEI the discharge capacity gradually decreases from 172 to 119 mAh/g during the first 6 cycles at a C-rate of C/20. By increasing the C-rate to C/10, C/2, C, and C2 the discharge capacity decreases to 98, 74, 68, and 62 mAh/g, respectively, with an high Coulombic efficiency close to 100 %. Remarkably, after 30 cycles the sample shows a similar discharge capacity of 126 mAh/g at a C-rate of C/20 compared to the first cycle after the solid electrolyte interphase was formed. A reversible capacity higher than the theoretical capacity is attributed to a contribution from the carbon black at the surface of the electrode.

## Example 5: Investigation of charge and discharge capacities of $Na_3Fe_2Li_3F_{12}$

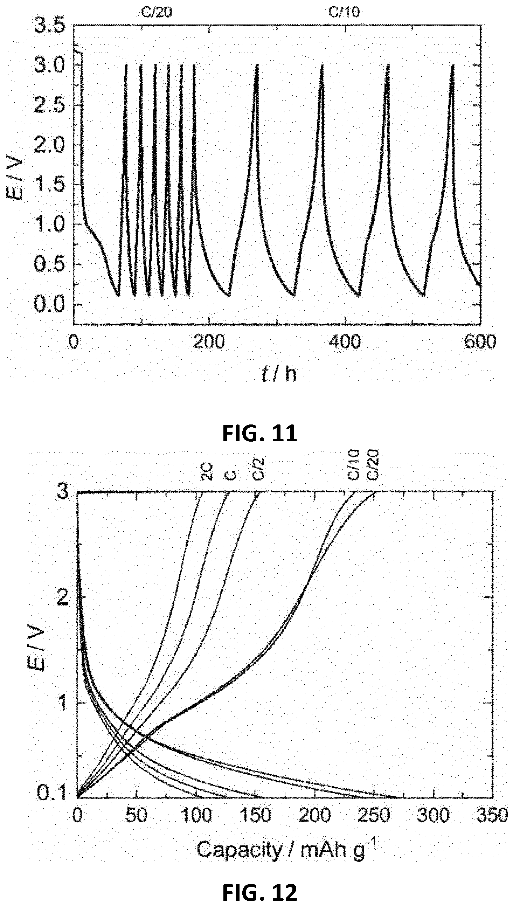

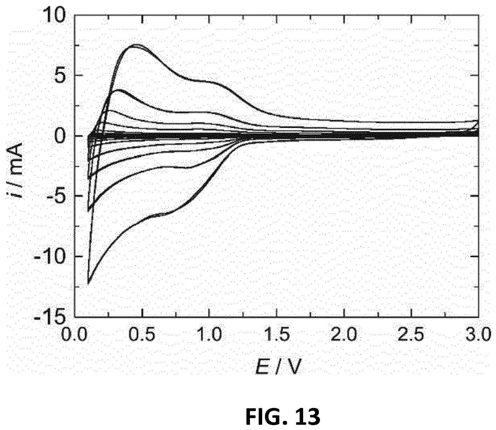

A 2 g batch of $Na_3Fe_2Li_3F_{12}$, was synthesized as explained in Example 1 and ball milled 6 times for 20 minutes with 400 rpm. Conventional lithium ion batteries were then prepared as described as follow. The anode prepared by 140 mg of the $Na_3Fe_2Li_3F_{12}$ batch mixed with 50 mg Super C65, 10 mg Knyar 761 (PVDF) and 0.95 ml N-Methyl-2-pyrrolidon. The obtained slurry was casted on a Cu-foil with a thickness of 100 $\mu$m and dried at 60°C for 12 h in a climate chamber. 10 mm diameter electrodes were stamped out of the cooper foil and were dried again under reduced pressure of ($10^{-4}$ mbar) for 12 h. Batteries were cycled at different rates of C/20, C/10, C/2, C, 2C in a voltage range of 0.1 - 3 V vs. $Li^+$/Li. The theoretical specific capacity calculated according to the weight of the active material in the electrode is 124.81 mAh g$^{-1}$ for insertion of 2 Li per formula unit. The former value was used as the 1 C rate (note that 1C refers to two Li extraction from the crystal structure per formula unit in 1 h). The initial charge and discharge capacities are 1386 and 260 mAh/g, respectively, corresponding to a Coulombic efficiency of 20 %. Such an irreversible capacity loss in the initial cycle corresponds to formation of a solid electrolyte interface (SEI) as well as to the amorphisation of the garnet structure. The corresponding cycling charge-discharge performance of $Na_3Fe_2Li_3F_{12}$ at different C-rates, C/20, C/10, C/2, C, 2C, in a voltage range of 0.1 - 3.2 V vs. Li$^+$/Li as a function of time are presented in **Fig. 11**. The first charge discharge profiles of $Na_3FeLi_3F_{12}$ Li-ion batteries in a voltage range from 0.1 to 3 V at different charge and discharge rates of C/20, C/10, C/2, C, 2C are displayed in **Fig. 12**. The profiles of the discharge process may originate from redox reaction, which is also reflected by the cyclic voltammogram (CV) profiles at sweep rates of 0.05, 0.10, 0.20, 0.50, 1.00, 2.00, 5.00, 10.0, 20.0, and 50.0 mV/s as presented in **Fig. 13** indicating redox activity. The cycling charge-discharge performance and the Coulombic efficiency of $Na_3Fe_2Li_3F_{12}$ at different C-rates, C/20, C/10, C/2, C, 2C, in a voltage range of 0.1 - 3.0 V vs. Li$^+$/Li as a function of the cycle number is presented in **Fig. 6**. After the formation of the SEI the discharge capacity decreases from 260 to 202 mAh/g during the first 18 cycles at a C-rate of C/20. By increasing the C-rate to C/10, C/2, C, and C2 the discharge capacity decreases to 203, 198, 136, 112, and 92, respectively, with an high Coulombic efficiency close to 100 %. Remarkably, after 60 cycles the sample shows an even higher discharge capacity of 239 mAh/g at a C-rate of C/20 compared to the last cycle with the same cycle rate. A reversible capacity higher than the theoretical capacity is attributed to a contribution from the carbon black and a double-layer capacitance at the surface of the electrode.

REFERENCES

(1) Y. Koyama, I. Tanaka, H. Adachi, New fluoride cathodes for rechargeable lithium batteries: J. Electrochem. Soc. 147 (2000) 3633-3636

(2) C. Liu, Z. G. Neale, G. Cao, Understanding electrochemical potentials of cathode materials in rechargeable batteries: Mater. Today 19 (2016) 109-123

(3) Ravet et al. in Journal of Power Sources, 2001, 97-98, 503-507

(4) H. Xie, K.-S. Park, J. Song, J. B. Goodenough, Reversible lithium insertion in the garnet framework of Li3Nd3W2O12: Electrochem. Comm. 19 (2012) 135-137

(5) N. Nitta, F. Wu, J. T. Lee, G. Yushin, Li-ion battery materials: present and future: Mater. Today 18 (2015) 252-264.

(6) G. Che, KL. B. Jirage, E. R. Fischer, C. R. Martin, H. Yoneyama, Chemical-Vapor Deposition-Based Template Synthesis of Microtubular TiS2 Battery Electrodes: J. Electrochem. Soc. 144 (12) (1997) 4296-4302.

(7) J. Cho, K. Young-Woon, K. Byoungsoo, P. Byungwoo, Angew. Chem. Int. Ed. 42 (14) (2003) 1618-1621.

(8) T. Ohzuku, A. Ueda, M. Nagayama, Electrochemistry and Structural Chemistry of LiNiO2 (R3m) for 4 Volt Secondary Lithium Cells: J. Electrochem. Soc. 140 (7) (1993) 1862-1870.

(9) P. Bruce, A. R. Armstrong, R. L. Gitzendanner, New intercalation compounds for lithium batteries: layered LiMnO2: J. Mater. Chem. 9 (1999) 193-198.

(10) F. Lin, I. M. Markus, D. Nordlund, T.-C. Wenig, M. D. Asta, H. L- Xin, M. M. Doeff, Surface reconstruction and chemical evolution of stoichiometric layered cathode materials for lithium-ion batteries: Nat. Commun. (2014) 5.

(11) S. K. Martha, O. Haik, E. Zinigrad, I. Exnar, T. Drezen, J. H. Miners, D. Aurbach, On the Thermal Stability of Olivine Cathode Materials for Lithium-Ion Batteries: J. Electrochem. Soc. 158 (2011) A1115-A1122.

(12) M.-J. Lee, S. Lee, P. Oh, Y. Kim, J. Cho, High Performance LiMn2O4 Cathode Materials Grown with Epitaxial Layered Nanostructure for Li-Ion Batteries: Nano Lett. (2014) 14 (2) 993-999.

(13) S. Choi, A. Manthiram, Synthesis and Electrochemical Properties of LiCo2O4 Spinel Cathodes: J. Electrochem. Soc. 149 (2002) A162-A166.

(14) Yamada, S. C. Chung, K. Hinokuma, Optimized LiFePO4 for lithium battery cathodes: J. Electrochem. Soc. 148 (2001) A224-A229.

(15) D. Choi, D. Wang, I.-T. Bae, J. Xiao, Z. Nie, W. Wang, V. V. Viswanathan, Y. J. Lee, J.G. Zhang, G. L. Graff, Z. Yang, J. Liu, LiMnPO4 Nanoplate Grown via Solid-State Reaction in Molten Hydrocarbon for Li-Ion Battery Cathode: Nano Lett. 10 (2010) 2799-2805.

(16) J. Loris, C. Perez Vincente, J. L. Tirado, Improvement of the Electrochemical Performance of LiCoPO4 5 V Material Using a Novel Synthesis Procedure: Electrochem. Solid State Lett. 5 (10) (2002) A234-A237.

(17) Sobkowiak, M. R.Roberts, R. Younesi,T. Ericsson, L. Häggström, C.W. Tai, A. M. Andersson, K. Edström, T. Gustafsson, F. Björefors, Understanding and Controlling the Surface Chemistry of LiFeSO4F for an Enhanced Cathode Functionality: Chem. Mater. 25 (15) (2013) 3020-3029.

(18) J. Barker, R. K. B. Gover, P. Burns, A. Bryan, M. Y. Saidi, J. L. Swoyer, Structural and electrochemical properties of lithium vanadium fluorophosphate, LiVPO4F: J. Power Sources 146 (2005) 516-520.

**Claims**

1. A lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = $Li^+$, $K^+$ and/or $Ag^+$
M'' = $Ti^{3+}$, $V^{3+}$, $Cr^{3+}$, $Mn^{3+}$, $Fe^{3+}$, $Ni^{3+}$ and/or $Co^{3+}$, wherein M'' is optionally partially substituted with $X_e$, with X = $Al^{3+}$, $Ga^{3+}$, $In^{3+}$, $Sc^{3+}$ and/or $Y^{3+}$, and $e \leq 1$
M''' = $Mg^{2+}$, $Cu^{2+}$, and/or $Zn^{2+}$
A = $Cl^-$, $Br^-$, and/or $I^-$
a = 0 - 3
b = 0 - 2
c = 0 - 2
b + c = 2
d = 0 - 1

wherein $(Li_{3+c})$ is optionally partially substituted with $Z_h$, with Z = $Na^+$, $K^+$, $Rb^+$, $Cs^+$, $Ag^+$, $B^{3+}$, $Al^{3+}$, $Ga^{3+}$, $In^{3+}$, $Si^{4+}$, and/or $Ge^{4+}$ and h < 0.2,
wherein the anions are optionally partially replaced by a vacancy VAf, with f = 0 - 1 and/or the cations are optionally partially replaced by a vacancy $VC_g$, with g = 0 - 0.5,
and with the proviso that lithium-containing fluorides of formula $\{Na_3\}[M''_2](Li_3)F_{12}$ with M = $Ti^{3+}$, $V^{3+}$, $Cr^{3+}$, $Mn^{3+}$, $Fe^{3+}$, $Ni^{3+}$, and/or $Co^{3+}$ are excluded.

2. Use of a lithium-containing fluoride having a garnet crystal structure and having the stoichiometric composition of the general formula:

$$\{Na_{3-a}M'_a\}[M''_bM'''_c](Li_{3+c})F_{12-d}A_d$$

wherein

M' = $Li^+$, $K^+$ and/or $Ag^+$
M'' = $Ti^{3+}$, $V^{3+}$, $Cr^{3+}$, $Mn^{3+}$, $Fe^{3+}$, $Cu^{3+}$, $Zn^{3+}$, $Ni^{3+}$ and/or $Co^{3+}$, wherein M'' is optionally partially substituted with $X_e$, with X = $Al^{3+}$, $Ga^{3+}$, $In^{3+}$, $Sc^{3+}$ and/or $Y^{3+}$, and $e \leq 1$
M''' = $Mg^{2+}$, $Ca^{2+}$, $Cu^{2+}$, and/or $Zn^{2+}$
A = $Cl^-$, $Br^-$, and/or $I^-$
a = 0 - 3
b = 0 - 2
c = 0 - 2
b + c = 2
d = 0 - 1

wherein $(Li_{3+c})$ is optionally partially substituted with $Z_h$, with Z = $Na^+$, $K^+$, $Rb^+$, $Cs^+$, $Ag^+$, $B^{3+}$, $Al^{3+}$, $Ga^{3+}$, $In^{3+}$, $Si^{4+}$, and/or $Ge^{4+}$ and h < 0.2,
wherein the anions are optionally partially replaced by a vacancy VAf, with f = 0 - 1 and/or the cations are optionally partially replaced by a vacancy $VC_g$, with g = 0 - 0.5,
or the use of cryolithionite ($\{Na_3\}[Al_2](Li_3)F_{12}$),
in electrochemical applications, wherein the use is selected from the group consisting of the use in an electrochemical storage and/or conversion device, the use in an electrode, and the use as electrode material comprised in an electrode, and with the proviso that the use of cryolithionite ($\{Na_3\}[Al_2](Li_3)F_{12}$) as conducting salt comprised in a liquid electrolyte of an electrochemical storage and/or conversion device is excluded.

3. The use according to claim 2, **characterized in that** the stoichiometric composition is $\{Na_3\}[M''_2](Li_3)F_{12}$.

4. The use according to claim 3, wherein the stoichiometric composition is selected from the group consisting of $\{Na_3\}[Ti_2](Li_3)F_{12}$, $\{Na_3\}[V_2](Li_3)F_{12}$, $\{Na_3\}[Cr_2](Li_3)F_{12}$, $\{Na_3\}[Mn_2](Li_3)F_{12}$, $\{Na_3\}[Fe_2](Li_3)F_{12}$, $\{Na_3\}[Co_2](Li_3)F_{12}$, and $\{Na_3\}[Ni_2](Li_3)F_{12}$.

5. The lithium-containing fluoride according to claim 1 or the use according to claim 2, wherein the stoichiometric composition is selected from the group consisting of $\{Na_3\}[Fe_{1.95}Mg_{0.05}](Li_{3.05})F_{12}$, $\{Na_3\}[Co_{1.95}Mg_{0.05}](Li_{3.05})F_{12}$, $\{Na_3\}[Ni_{.95}Mg_{0.05}](Li_{3.05})F_{12}$, $\{Na_3\}[Fe_{1.95}Ca_{0.05}](Li_{3.05})F_{12}$, $\{Na_3\}[Co_{1.95}Cu_{0.05}](Li_{3.05})F_{12}$, $\{Na_3\}[Ni_{.95}Cu_{0.05}](Li_{3.05})F_{12}$.

6. The lithium-containing fluoride according to claim 1 or the use according to claim 2, wherein a = 0 and d = 0.

7. The lithium-containing fluoride according to claim 1 or the use according to claim 2, wherein M" = $Ti^{3+}$, $Fe^{3+}$, or $Mn^{3+}$.

8. The lithium-containing fluoride according to claim 1 or the use according to claim 2, wherein M''' = $Cu^{2+}$.

9. The lithium-containing fluoride according to any one of the preceding claims or the use of a lithium-containing fluoride according to any one of the preceding claims, further comprising at least one anion dopant selected from the group consisting of $O^{2-}$, $N^{3-}$ and/or $S^2$, replacing the anions in the crystal lattice of the garnet in an amount of up to 10%.

10. A process for preparing a lithium-containing fluoride having a garnet crystal structure according to claim 1, **characterized in that** precursor compounds of components $Na^+$, M', M" and/or M''', preferably salts, hydroxides and/or oxides of components $Na^+$, M', M" and/or M''', are reacted with one another.

11. The process according to claim 10, **characterized in that** the reaction is carried out by means of a precipitations reaction of the dissolved precursor compounds of said components in the presence of hydrogen fluoride.

12. The process according to claim 10, **characterized in that** the reaction is carried out by means of solid-state synthesis.

13. The process of claim 12, **characterized in that** the precursor compounds are fluorides of said components.

14. An electrode comprising or consisting of a lithium-containing fluoride having a garnet crystal structure, wherein the lithium-containing fluoride has a stoichiometric composition as defined in any one of claims 2 - 9.

15. An electrochemical storage and/or conversion device comprising a lithium-containing fluoride having a garnet crystal structure, wherein the lithium-containing fluoride has a stoichiometric composition as defined in any one of claims 2 - 9, with the proviso that cryolithionite ({$Na_3$}[$Al_2$]($Li_3$)$F_{12}$) in form of a conduction salt is excluded.

16. The use according to any one of claims 2 - 9 or the electrochemical storage and/or conversion device according to claim 15, **characterized in that** the electrochemical storage and/or conversion device is a battery, an accumulator, a supercapacitor or a fuel cell.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

Europäisches
Patentamt

European
Patent Office

Office européen
des brevets

# EUROPEAN SEARCH REPORT

Application Number

EP 19 15 9651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/372199 A1 (MEYER JOERG [DE] ET AL) 24 December 2015 (2015-12-24)<br>* abstract *<br>* paragraphs [0040], [0051] *<br>* figure 5 * | 1,10,11<br><br>2-9,<br>12-16 | INV.<br>H01M10/052<br>C01G23/00<br>C01G31/00<br>C01G37/00<br>C01G45/00 |
| A | S GELLER: "REFINEMENT OF THE CRYSTAL STRUCTURE OF CRYOLITHIONITE, {Na3}[AI2](Li3)F12",<br>THE AMERICAN MINERALOGIST,<br>vol. 56, no. 1-2,<br>1 January 1971 (1971-01-01), pages 18-23,<br>XP055611893,<br>ISSN: 1945-3027<br>* the whole document * | 1-16 | C01G49/00<br>C01G51/00<br>C01G53/00<br>C01F5/00<br>C01F7/00<br>C01F11/00<br>C01G9/00<br>C01G15/00<br>H01M10/0562<br>H01M10/42 |
| A | TAKEDA Y ET AL: "High pressure form of fluoride garnets Na"3M"2Li"3F"1"2 (M=Al & Fe)",<br>MATERIALS RESEARCH BULLETIN, ELSEVIER, KIDLINGTON, GB,<br>vol. 12, no. 7, 1 July 1977 (1977-07-01),<br>pages 689-692, XP024077218,<br>ISSN: 0025-5408, DOI:<br>10.1016/0025-5408(77)90127-1<br>[retrieved on 1977-07-01]<br>* the whole document * | 1-16 | |
| | -/-- | | TECHNICAL FIELDS SEARCHED (IPC)<br><br>H01M<br>C01G<br>C01F |

The present search report has been drawn up for all claims

| Place of search | Date of completion of the search | Examiner |
|---|---|---|
| Munich | 9 August 2019 | Gregori, Giuliano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 19 15 9651

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDRZEJ GRZECHNIK ET AL: "The compressibility mechanism of Li3Na3In2F12 garnet", JOURNAL OF PHYSICS: CONDENSED MATTER, INSTITUTE OF PHYSICS PUBLISHING, BRISTOL, GB, vol. 18, no. 10, 15 March 2006 (2006-03-15), pages 2915-2924, XP020101715, ISSN: 0953-8984, DOI: 10.1088/0953-8984/18/10/014 * the whole document * | 1-16 | |

TECHNICAL FIELDS
SEARCHED      (IPC)

The present search report has been drawn up for all claims

| Place of search | Date of completion of the search | Examiner |
|---|---|---|
| Munich | 9 August 2019 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 15 9651

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2019

| Patent document cited in search report | Publication date | Patent family member(s) | | Publication date |
|---|---|---|---|---|
| US 2015372199 A1 | 24-12-2015 | CN | 102782086 A | 14-11-2012 |
| | | EP | 2513247 A2 | 24-10-2012 |
| | | JP | 5698762 B2 | 08-04-2015 |
| | | JP | 2013514655 A | 25-04-2013 |
| | | KR | 20120104377 A | 20-09-2012 |
| | | RU | 2012130098 A | 27-01-2014 |
| | | TW | 201145603 A | 16-12-2011 |
| | | US | 2012305972 A1 | 06-12-2012 |
| | | US | 2015372199 A1 | 24-12-2015 |
| | | WO | 2011073871 A2 | 23-06-2011 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2196434 A1

**Non-patent literature cited in the description**

- **RAVET et al.** *Journal of Power Sources,* 2001, 97-98, 503-507
- **H. XIE ; K.-S. PARK ; J. SONG ; J. B. GOODE-NOUGH.** Reversible lithium insertion in the garnet framework of Li3Nd3W2O. *Electrochem. Comm.,* 2012, vol. 19, 135-137
- **Y. KOYAMA ; I. TANAKA ; H. ADACHI.** New fluoride cathodes for rechargeable lithium batteries. *J. Electrochem. Soc.,* 2000, vol. 147, 3633-3636
- **C. LIU ; Z. G. NEALE ; G. CAO.** Understanding electrochemical potentials of cathode materials in rechargeable batteries. *Mater. Today,* 2016, vol. 19, 109-123
- **O'CALLAGHAN et al.** Switching on Fast Lithium Ion Conductivity in Garnets: The Structure and Transport Properties of Li3+xNd3Te2-xSbxO. *Chem. Mater.,* 2008, vol. 20, 2360
- **BONACCORSO F et al.** Graphene, related two dimensional crystals, and hybrid systems for energy conversion and storage. *Science,* 2015, vol. 347, 1246501-1246501
- **N. NITTA ; F. WU ; J. T. LEE ; G. YUSHIN.** Li-ion battery materials: present and future. *Mater. Today,* 2015, vol. 18, 252-264
- **G. CHE ; KL. B. ; JIRAGE, E. ; R. FISCHER ; C. R. MARTIN ; H. YONEYAMA.** Chemical-Vapor Deposition-Based Template Synthesis of Microtubular TiS2 Battery Electrodes. *J. Electrochem. Soc.,* 1997, vol. 144 (12), 4296-4302
- **J. CHO ; K. YOUNG-WOON ; K. BYOUNGSOO ; P. BYUNGWOO.** *Angew. Chem. Int. Ed.,* 2003, vol. 42 (14), 1618-1621
- **T. OHZUKU ; A. UEDA ; M. NAGAYAMA.** Electrochemistry and Structural Chemistry of LiNiO2 (R3m) for 4 Volt Secondary Lithium Cells. *J. Electrochem. Soc.,* 1993, vol. 140 (7), 1862-1870
- **P. BRUCE ; A. R. ARMSTRONG ; R. L. GITZENDANNER.** New intercalation compounds for lithium batteries: layered LiMnO. *J. Mater. Chem.,* 1999, vol. 9, 193-198

- **F. LIN ; I. M. MARKUS ; D. NORDLUND ; T.-C. WENIG ; M. D. ASTA ; H. L- XIN ; M. M. DOEFF.** Surface reconstruction and chemical evolution of stoichiometric layered cathode materials for lithium-ion batteries. *Nat. Commun.,* 2014, vol. 5
- **S. K. MARTHA ; O. HAIK ; E. ZINIGRAD ; I. EXNAR ; T. DREZEN ; J. H. MINERS ; D. AURBACH.** On the Thermal Stability of Olivine Cathode Materials for Lithium-Ion Batteries. *J. Electrochem. Soc.,* 2011, vol. 158, A1115-A1122
- **M.-J. LEE ; S. LEE ; P. OH ; Y. KIM ; J. CHO.** High Performance LiMn2O4 Cathode Materials Grown with Epitaxial Layered Nanostructure for Li-Ion Batteries. *Nano Lett.,* 2014, vol. 14 (2), 993-999
- **S. CHOI ; A. MANTHIRAM.** Synthesis and Electrochemical Properties of LiCo2O4 Spinel Cathodes. *J. Electrochem. Soc.,* 2002, vol. 149, A162-A166
- **YAMADA, S. C. CHUNG ; K. HINOKUMA.** Optimized LiFePO4 for lithium battery cathodes. *J. Electrochem. Soc.,* 2001, vol. 148, A224-A229
- **D. CHOI ; D. WANG ; I.-T. BAE ; J. XIAO ; Z. NIE ; W. WANG ; V. V. VISWANATHAN ; Y. J. LEE ; J.G. ZHANG ; G. L. GRAFF.** LiMnPO4 Nanoplate Grown via Solid-State Reaction in Molten Hydrocarbon for Li-Ion Battery Cathode. *Nano Lett.,* 2010, vol. 10, 2799-2805
- **J. LORIS ; C. PEREZ VINCENTE ; J. L. TIRADO.** Improvement of the Electrochemical Performance of LiCoPO4 5 V Material Using a Novel Synthesis Procedure: Electrochem. *Solid State Lett.,* 2002, vol. 5 (10), A234-A237
- **SOBKOWIAK, M. R.ROBERTS ; R. YOUNESI ; T. ERICSSON ; L. HÄGGSTRÖM ; C.W. TAI ; A. M. ANDERSSON ; K. EDSTRÖM ; T. GUSTAFSSON ; F. BJÖREFORS.** Understanding and Controlling the Surface Chemistry of LiFeSO4F for an Enhanced Cathode Functionality. *Chem. Mater.,* 2013, vol. 25 (15), 3020-3029
- **J. BARKER ; R. K. B. GOVER ; P. BURNS ; A. BRYAN ; M. Y. SAIDI ; J. L. SWOYER.** Structural and electrochemical properties of lithium vanadium fluorophosphate, LiVPO4F. *J. Power Sources,* 2005, vol. 146, 516-520